# DEMANDE DE BREVET EUROPEEN

(11) **EP 2 404 734 A1**
(43) Date de publication de la demande: **11.01.2012**
(21) Numéro de dépôt: 11171350.9
(22) Date de dépôt: 24.06.2011
(51) Int. Cl.: B29C 47/06, B29C 69/00, B29C 69/02

(54) **Réalisation de feuilles en au moins deux matières thermoplastiques différentes et dispositif pour la mise en oeuvre du procédé**

(30) Priorité: 29.06.2010 FR 1055213
(71) Demandeur: Papeteries Hamelin, 14000 Caen (FR)
(72) Inventeur: Joan, Eric, 14280 SAINT CONTEST (FR)
(74) Mandataire: Thinat, Michel

(57) **Abrégé**

L'invention concerne un procédé de réalisation de feuilles en au moins deux matières thermoplastiques différentes dont une matière souple (44) et une matière rigide (4), ainsi qu'un dispositif pour la mise en oeuvre du procédé.
Selon le procédé de l'invention, les matières thermoplastiques sont co-extrudées en continu de manière à obtenir un flan « sans fin » constitué d'au moins trois bandes juxtaposées « side-by-side », chacune de ces bandes étant réalisée en au moins une desdites matières et différente d'une bande adjacente, et le flan étant coupé à la fin en des longueurs prédéterminés pour obtenir les feuilles souhaitées.

## Description

La présente invention concerne un procédé de réalisation de feuilles en au moins deux matières thermoplastiques différentes dont une matière souple et une matière rigide. L'invention concerne également un dispositif pour la mise en oeuvre de ce procédé.

La réalisation d'articles de classements tels des classeurs, des boîtes archives et des chemises pour le classement et le rangement de documents se fait non seulement à partir de flans en papier ou en carton mais aussi à partir de flans en matière plastique ou en des matières combinées tel que du carton revêtu de couches en matière plastique afin de les rendre plus résistants.

Cependant, comme il s'est avéré avec le temps au cours de l'utilisation de tels articles de classement, les charnières de ces articles de classement restent un point faible.

En effet, lorsque les articles de classement sont réalisés en carton, revêtus ou non de couches en matière plastique, ils cassent le plus souvent d'abord aux charnières, car ce sont les parties les plus sollicitées par les nombreux mouvements d'ouverture et de fermeture. Et lorsque les articles de classement sont réalisés en une ou plusieurs matières thermoplastiques, les charnières sont plus résistantes que celles des articles en carton mais aussi plus rigides.

Pour remédier aux inconvénients décrits ci-avant, il est proposé de réaliser des flans, à partir desquels on va former lesdits articles de classement, en au moins deux matières thermoplastiques différentes extrudées en au moins trois parties et avec des caractéristiques alternantes, par exemple rigide-souple-rigide, de façon que la ou chacune des charnières est formée par une partie souple.

On obtient ainsi par exemple un flan en trois parties dont les deux parties extérieures sont rigides et dont la partie centrale est souple afin de pouvoir servir comme charnière.

Notons dans ce contexte que les termes « rigide » et « souple » sont utilisés ici sans rentrer dans les détails de différents degrés de rigidité ou de différents degrés de souplesse obtenus par des adjuvants appropriés mélangés aux matières thermoplastiques respectives ou par un choix approprié des matières thermoplastiques elles-mêmes. Les termes « rigide » et « souple » signalent donc principalement les caractéristiques relatives des parties entre elles d'un article de classement selon la présente invention, car les mérites de la présente invention concernent des articles de classement en matière rigide ayant une ou plusieurs charnières souples.

D'une manière générale, la présente invention propose pour la réalisation de feuilles en au moins deux matières thermoplastiques différentes, dont une matière souple et une matière rigide, que les matières thermoplastiques soient co-extrudées en continu « side-by-side » de manière à obtenir un flan « sans fin » constitué d'au moins trois bandes juxtaposées, chacune de ces bandes étant réalisée en au moins une desdites matières et différente d'une bande adjacente, et le flan étant coupé à la fin en des longueurs prédéterminés pour obtenir les feuilles souhaitées.

Afin de pouvoir varier les caractéristiques des parties relativement souples destinées à remplir la fonction de charnière, il y a deux possibilités complémentaires .
- les matières thermoplastiques sont co-extrudées de façon qu'au moins une des bandes est réalisée en au moins deux matières thermoplastiques différentes extrudées en au moins deux couches superposées, l'une des matières thermoplastiques donnant à la bande la caractéristique typique, souple ou rigide, de cette bande et l'autre ou les autres matières variant le degré de rigidité ou de souplesse et, par cela, la résistance mécanique de l'ensemble ainsi réalisé. De plus, cette disposition permet d'exercer une influence sur le toucher de l'article de classement ;
- sur une bande réalisée en - ou comprenant essentiellement - la ou une desdites matières souples, donc sur une bande souple, le flan est soumis- de manière supplémentaire - à un rainurage, afin de faciliter à cette bande la fonction de charnière d'articulation d'une part lors des premiers pliages du flan et aussi lorsque les matières se durcissent et rendent les pliages toujours plus difficiles.

Pour la réalisation des feuilles en au moins deux matières thermoplastiques différentes selon le procédé défini plus haut, l'invention propose un dispositif comprenant des moyens d'extrusion adaptés pour pouvoir co-extruder les matières thermoplastiques en continu « side-by-side » de manière à obtenir un flan « sans fin » constitué d'au moins trois bandes juxtaposées, chacune de ces bandes étant réalisée en au moins une desdites matières thermoplastiques et différente d'une bande adjacente, et des moyens de découpe adaptés pour pouvoir couper le flan à la fin en des longueurs prédéterminés pour obtenir les feuilles souhaitées.

Ce qui est appelé ci-avant co-extruder « side-by-side » et ce qui donne des flans formés par des bandes juxtaposées "side-by-side", est une disposition de trois ou d'avantage de bandes une à côté de l'autre dans le sens de l'extrusion et dans un même plan le long duquel ou dans lequel les bandes sont disposées et s'étendent l'une parallèlement à l'autre. Cette disposition est à comprendre par opposition à une disposition en couches superposées où des couches de matières thermoplastiques différentes s'étendent parallèlement l'une à l'autre pour former une même bande. Elle n'est donc pas à confondre avec d'autres dispositions représentées dans les dessins et expliquées dans la description ci-après.

Le dispositif de l'invention peut être conçu de différentes manières selon la conception du flan que l'on veut obtenir. Ainsi,
- les moyens d'extrusion peuvent être adaptés pour pouvoir co-extruder les matières thermoplastiques de façon qu'au moins une des bandes est réalisée en au moins deux matières thermoplastiques différentes extrudées en au moins deux couches superposées ;
- le dispositif peut comprendre des moyens de rainurage adaptés pour pouvoir effectuer un rainurage sur une bande réalisée en - ou comprenant - la ou une desdites matières souples, afin de donner à cette bande la fonction d'une charnière d'articulation ;
- les moyens d'extrusion peuvent être adaptés pour pouvoir co-extruder les matières thermoplastiques en cinq bandes dont la deuxième et la quatrième bandes sont réalisée en - ou comprennent - une couche de matière thermoplastique souple ;
- les moyens d'extrusion peuvent être adaptés pour pouvoir co-extruder les matières thermoplastiques en un multiple de trois bandes ; le dispositif comprend alors des moyens de découpe longitudinale adaptés pour pouvoir découper le flan dans le sens de l'extrusion en ce même multiple de flans « sans fin » partiels.

Les matières thermoplastiques que l'on peut utiliser pour la réalisation d'une bande rigide et pour la réalisation d'une bande souple sont par exemple les suivantes .
1. parties rigide
   toutes matières « thermoplastiques » pouvant être extrudées et comportant des caractéristiques physiques, mécaniques et d'aspect permettant de réaliser une feuille par voie d'extrusion, comme par exemple:
      1.1 polyoléfines tels que Polypropylène ou Polyéthylène, homopolymère ou copolymère, ou tout mélange comportant une polyoléfine, de type radicalaire ou linéaire, de basse densité, moyenne densité ou haute densité, ... ;
         polyoléfines pouvant comporter une ou plusieurs charges minérales telles que Talc, Carbonate de Calcium, Kaolin ou toute autre charge minérale pouvant renforcer ou améliorer une des caractéristiques de cette ou ces polyoléfines ;
         polyoléfines comportant des fibres de tous types, de la farine de bois, des copeaux de papier ou carton, divers additifs apportant des caractéristiques techniques ou visuelles au produit ;
         polyoléfines comportant un ou plusieurs additifs, comme un agent nucléant, des agents d'expansion chimiques ou gazeux, un agent protecteur d'UV ou antistatique, dissipateur d'énergie électrique, etc ... ;
         polyoléfines réticulées par différentes méthodes;
         polyoléfines d'aspect naturel, transparent ou coloré ;
      1.2 polystyrènes de tous types, choc ou cristal, comportant ou non des additifs et renforçateurs, des agents d'expansion chimiques ou gazeux, des charges minérales, etc ... ;
      1.3 PVC rigide, ABS, et toute famille de polyéthylène téréphtalate tels que PET, APET ... ;
      1.4 toutes matières synthétiques obtenues à partir de produits d'origine végétale, tels que PLA, PHA, PBAT copolyester ... ;
2. parties souple
   toutes matières thermoplastiques ou équivalentes, souples et compatibles avec celle utilisée pour l'extrusion des parties rigides et pouvant être co-extrudées avec la composante « rigide », utilisées seules ou en mélange, avec ou sans additifs, comme par exemple:
      2.1 les polyoléfines souples des familles Polypropylène et Polyéthylène ;
      2.2 les polyoléfines souples tels que TPE (thermoplastiques élastomères), TPO, EPR (éthylène propylène rubber), EPDM, ... ;
      2.3 les caoutchoucs naturels ou synthétiques;
      2.4 les EVA ;
      2.5 les PVC souples;
      2.6 les polystyrènes souples;
      2.7 les polyuréthanes ;
      2.8 le (poly)styrène-butadiène-styrène (SBS);
      2.9 le styrène-éthylène-butylène-styrène (SEBS).

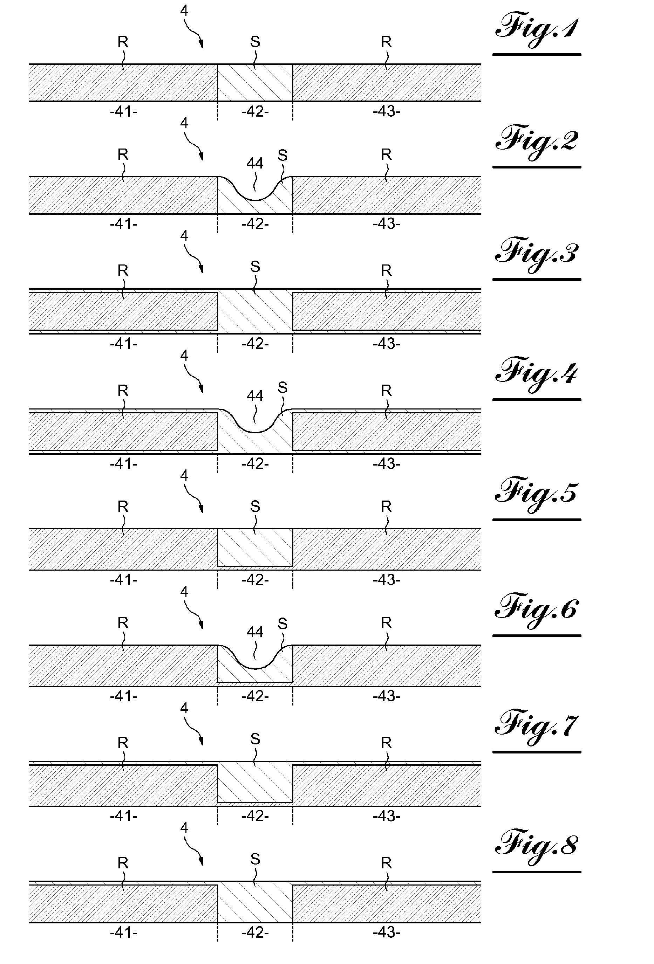

Alors que la co-extrusion de ces matières thermoplastiques en différentes couches superposées ne pose en principe pas de problème, la co-extrusion "side-by-side" peut s'avérer difficile, au moins pour certaines combinaisons de matière souple et de matière rigide, lorsque l'épaisseur du flan est faible. Un remède possible est alors de recouvrir au moins partiellement la bande adjacente, comme cela est représenté par exemple sur les figures 3 et 7 expliquées plus loin.

Avec les matières thermoplastiques souples et rigides, dont un certain nombre d'exemples ont été cités ci-avant, on peut réaliser des flans « sans fin » ayant des bandes rigides et souples en de nombreuses combinaisons selon les différentes utilisations auxquelles les articles de classement doivent être adaptés.

Les dessins annexés représentent, de manière non limitative et en des coupes transversales, sur les figures 1 à 12 et 16 à 18 différentes combinaisons et conceptions de flans selon l'invention comprenant trois bandes, ainsi que, sur les figures 19 et 20, un dispositif, et une variante de ce dispositif, pour la réalisation de tels flans.

Plus particulièrement :
- la figure 1 représente la conception de base d'un flan 4 en trois bandes 41, 42, 43, à savoir deux bandes extérieures 41, 43 réalisées en une matière thermoplastique rigide R et une bande centrale 42 en matière thermoplastique souple S ; les trois bandes sont de même épaisseur ; par extension, il est facile à concevoir le flan réalisé en cinq bandes dont la deuxième et la quatrième bandes sont réalisées en - ou comprennent une couche de - matière thermoplastique souple alors que les trois autres bandes sont réalisées en matière thermoplastique rigide ;
- la figure 2 représente le flan de la figure 1 en une variante de réalisation selon laquelle la bande centrale souple a été soumise à un rainurage de façon que la face supérieure du flan présente une rainure 44 dans le sens de la longueur de la bande centrale souple, alors que la face inférieure forme un plan unique sur la largeur entière des trois bandes ;
- la figure 3 représente une combinaison de deux bandes rigides extérieures avec une bande souple centrale où la matière souple s'étend au moins partiellement sur les deux faces supérieure et inférieure des bandes rigides ;
- la figure 4 représente la disposition de la figure 3 avec une rainure 44 pratiquée dans la bande souple ; cette rainure est représentée comme étant réalisée sans bourrelets sur les bords de la rainure alors qu'il est également possible de réaliser cette rainure en laissant se former des bourrelets le long des deux bords de la rainure ;
- la figure 5 représente une conception de flan où la matière thermoplastique rigide des deux bandes extérieures recouvre la face inférieure de la bande centrale réalisée principalement en matière thermoplastique souple ;
- la figure 6 représente la disposition de la figure 5 avec une rainure pratiquée dans la bande centrale souple mais uniquement dans la matière souple ;
- la figure 7 représente la conception des deux bandes rigides extérieures et d'une bande souple centrale avec la particularité que les deux bandes rigides sont reliées l'une à l'autre par une couche fine de matière thermoplastique rigide recouvrant une face de la bande souple alors que la matière thermoplastique souple s'étend aussi sur les faces supérieures des bandes rigides, donc sur la face du flan qui est opposée à celle où la bande souple est recouverte de matière thermoplastique rigide ;
- la figure 8 représente la disposition de la figure 7 sans matière rigide couvrant la bande souple ;

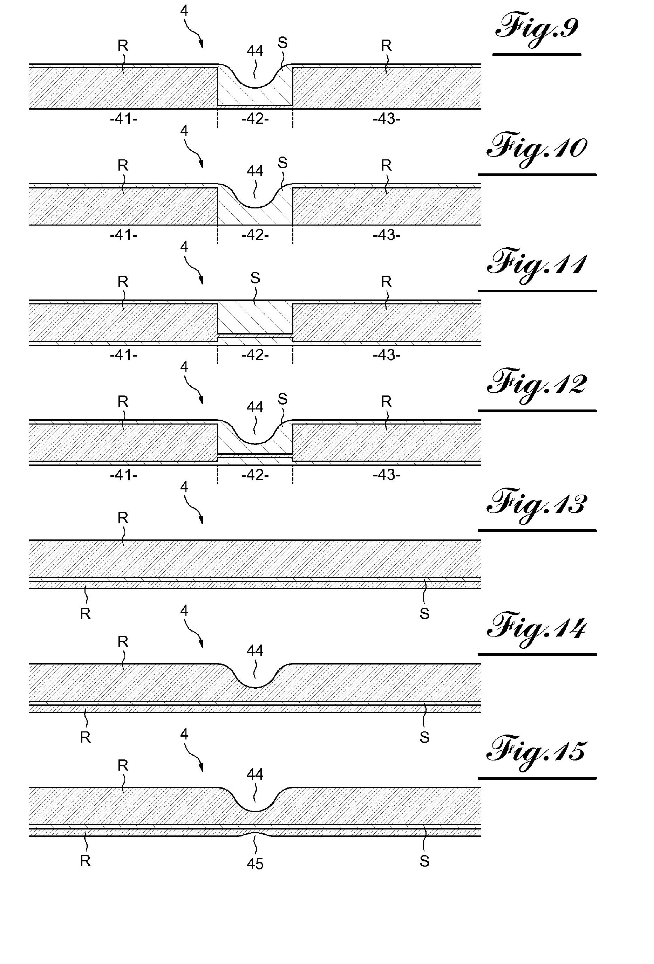

- les figures 9 et 10 représentent les dispositions des figures 7 et 8 avec formation d'une rainure dans la partie souple de la bande centrale ;
- la figure 11 représente une disposition de deux bandes rigides extérieures et d'une bande souple centrale avec la particularité d'une fine couche de liaison en thermoplastique rigide entre les bandes rigides extérieures, cette couche de liaison recouvrant la bande centrale souple et étant recouverte elle-même d'une couche souple ; de plus, de la matière thermoplastique souple recouvre au moins partiellement les deux faces opposées des deux bandes rigides extérieures ;
- la figure 12 représente la disposition de la figure 11 avec application d'une rainure dans la partie souple centrale ;
- la figure 13 représente la conception d'un flan homogène sur toute sa largeur dans le sens qu'il n'y a pas de répartition en bandes mais que le flan est réalisé en une matière thermoplastique rigide recouverte d'une matière thermoplastique souple qui est elle-même recouverte d'une matière thermoplastique rigide ;
- la figure 14 représente la disposition de la figure 13 avec une rainure du côté de la matière rigide ;
- la figure 15 représente la disposition de la figure 13 avec une rainure 44 pratiquée du côté de la matière thermoplastique rigide épaisse et une rainure 45 du côté opposé c'est-à-dire dans la couche fine de recouvrement en matière thermoplastique rigide ;

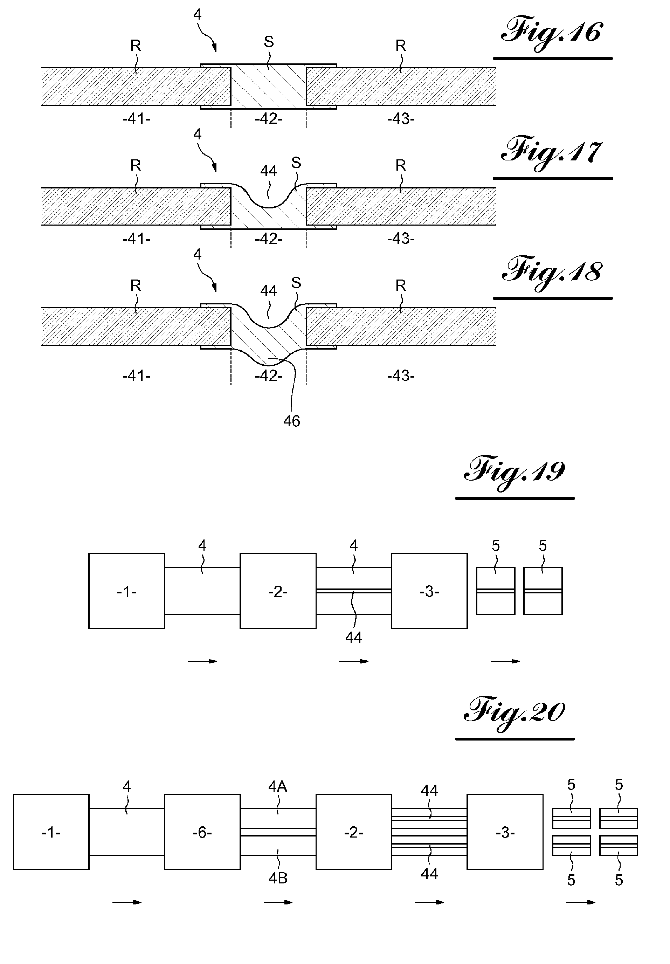

- la figure 16 représente la conception de deux bandes rigides extérieures avec une bande souple centrale s'étendant en recouvrement, sur les deux faces opposées des bandes rigides extérieures, sur une partie de la largeur de ces bandes rigides ;
- la figure 17 représente la disposition de la figure 16 avec une rainure formée sur une face de la bande centrale souple ;
- la figure 18 représente la disposition de la figure 16 avec une rainure 44 formée sur une face de la bande souple de façon et avec un bourrelet 46 sur la face opposée ;
- la figure 19 représente schématiquement un dispositif selon l'invention, le dispositif comprenant des moyens d'extrusion 1 adaptés pour pouvoir co-extruder les matières thermoplastiques « side-by-side » en continu de manière à obtenir un flan « sans fin » 4 constitué d'au moins trois bandes 41, 42, 43 juxtaposées « side-by-side », chacune de ces bandes étant réalisée en au moins une desdites matières thermoplastiques et leur caractéristique principale- souple ou rigide- étant différente d'une bande adjacente, des moyens de rainurage 2 adaptés pour former une rainure longitudinale 44 et des moyens de découpe 3 adaptés pour pouvoir couper le flan 4 à la fin en des longueurs prédéterminés pour obtenir les feuilles 5 souhaitées ; et
- la figure 20 représente le dispositif de la figure 19, selon une variante de l'invention, avec des moyens de coupe longitudinale 6 adaptés pour pouvoir découper le flan 4 dans le sens de l'extrusion en des flans « sans fin » partiels 4A, 4B dont chacun est pourvu ensuite d'une rainure longitudinale 44 et puis est découpé en des feuilles 5.

## Revendications

1. Procédé de réalisation de feuilles en au moins deux matières thermoplastiques différentes dont une matière souple et une matière rigide,
**caractérisé en ce que** les matières thermoplastiques sont co-extrudées en continu de manière à obtenir un flan « sans fin » constitué d'au moins trois bandes juxtaposées « side-by-side », chacune de ces bandes étant réalisée en au moins une desdites matières et différente d'une bande adjacente, et le flan étant coupé à la fin en des longueurs prédéterminés pour obtenir les feuilles souhaitées.

2. Procédé selon la revendication 1, **caractérisé en ce que** les matières thermoplastiques sont co-extrudées de façon qu'au moins une des bandes est réalisée en au moins deux matières thermoplastiques différentes extrudées en au moins deux couches.

3. Procédé selon la revendication 1 ou 2, **caractérisé en ce que** le flan est soumis à un rainurage, le rainurage étant effectué sur une bande réalisée en - ou comprenant - la ou une desdites matières souples, afin de faciliter à cette bande la fonction de charnière d'articulation.

4. Dispositif de réalisation de feuilles (5) en au moins deux matières thermoplastiques différentes dont une matière souple et une matière rigide,
**caractérisé en ce qu'**il comprend des moyens d'extrusion (1) adaptés pour pouvoir co-extruder les matières thermoplastiques en continu de manière à obtenir un flan « sans fin » (4) constitué d'au moins trois bandes (41, 42, 43) juxtaposées « side-by-side », chacune de ces bandes étant réalisée en au moins une desdites matières thermoplastiques et différente d'une bande adjacente, et des moyens de découpe (3) adaptés pour pouvoir couper le flan (4) à la fin en des longueurs prédéterminés pour obtenir les feuilles (5) souhaitées.

5. Dispositif selon la revendication 4, **caractérisé en ce que** les moyens d'extrusion (1) sont adaptés pour pouvoir co-extruder les matières thermoplastiques de façon qu'au moins une des bandes est réalisée en au moins deux matières thermoplastiques différentes extrudées en au moins deux couches superposées.

6. Dispositif selon la revendication 4 ou 5, **caractérisé en ce qu'**il comprend des moyens de rainurage (2) adaptés pour pouvoir effectuer un rainurage (44) sur une bande (42) réalisée en - ou comprenant - la ou une desdites matières souples, afin de donner à cette bande la fonction d'une charnière d'articulation.

7. Dispositif selon l'une quelconque des revendications 4 à 6, **caractérisé en ce que** les moyens d'extrusion (1) sont adaptés pour pouvoir co-extruder les matières thermoplastiques en cinq bandes dont la deuxième et la quatrième bandes sont réalisée en - ou comprennent
- une couche de matière thermoplastique souple.

8. Dispositif selon l'une quelconque des revendications 4 à 6, **caractérisé en ce que** les moyens d'extrusion (1) sont adaptés pour pouvoir co-extruder les matières thermoplastiques en un multiple de trois bandes et **en ce que** le dispositif comprend des moyens de découpe longitudinale (6) adaptés pour pouvoir découper le flan dans le sens de l'extrusion en ce même multiple de flans « sans fin » partiels (4A, 4B).
